# EUROPÄISCHE PATENTSCHRIFT

(11) **EP 3 040 231 B1**
(45) Veröffentlichungstag und Bekanntmachung des Hinweises auf die Patenterteilung: **03.07.2019**
(21) Anmeldenummer: 15199493.6
(22) Anmeldetag: 11.12.2015
(51) Int. Cl.: B60K 35/00, B60K 37/02, G01D 11/28, G01D 13/28

(54) **ANZEIGEINSTRUMENT ZUR ANZEIGE EINES BETRIEBSZUSTANDS EINES KRAFTFAHRZEUGS**
INDICATOR INSTRUMENT FOR INDICATION OF AN OPERATIONAL CONDITION OF A MOTOR VEHICLE
AFFICHEUR D'ETAT DE FONCTIONNEMENT D'UN VEHICULE AUTOMOBILE

(30) Priorität: 30.12.2014 DE 102014227028
(43) Veröffentlichungstag der Anmeldung: 06.07.2016
(73) Patentinhaber: Magneti Marelli GmbH, 65428 Rüsselsheim (DE)
(72) Erfinder: Hoss, Christian, 70771 Echterdingen (DE)
(74) Vertreter: Herrmann, Jochen

(56) Entgegenhaltungen:
- DE-A1- 3 602 020
- DE-A1- 19 519 444
- DE-A1-102010 009 254
- JP-A- H09 152 360
- JP-U- S6 019 077

## Beschreibung

Die vorliegende Erfindung betrifft ein Anzeigeinstrument zur Anzeige eines Betriebszustands eines Kraftfahrzeugs mittels mehrerer nebeneinander angeordneter Lichtfelder, die im Blickbereich einer Person an Bord des Kraftfahrzeugs angeordnet sind. Jedem der Lichtfelder ist mindestens eine Lichtquelle zugeordnet, die Licht zum Ausleuchten des Lichtfelds aussendet.

Aus dem Stand der Technik sind solche Anzeigeinstrumente für Kraftfahrzeuge in unterschiedlichen Ausführungsformen bekannt. Sie werden in modernen Fahrzeugen zur Anzeige eines Betriebszustands des Kraftfahrzeugs verwendet. So können die bekannten Anzeigeinstrumente bspw. zur Anzeige eines Füllstands eines Kraftstofftanks des Kraftfahrzeugs, eines Ladezustands einer Batterie des Kraftfahrzeugs, einer Geschwindigkeit des Kraftfahrzeugs, einer Drehzahl eines Motors des Kraftfahrzeugs, eines Niveaus einer eingestellten Leuchtweite von Scheinwerfern des Kraftfahrzeugs, einer eingestellten Temperatur oder einer eingestellten Stufe eines Gebläses einer Heizungsanlage genutzt werden. Der aktuelle Wert des Betriebszustands wird dabei nicht über einen Zeiger, sondern über eine Aktivierung bzw. Deaktivierung eines oder mehrerer Lichtfelder des Anzeigeinstruments angezeigt.

Ein Problem der bekannten Anzeigeinstrumente ist das Übersprechen von Licht von einer einem bestimmte Lichtfeld zugeordneten Lichtquelle zu einem benachbarten Lichtfeld. Das führt dazu, dass in den Fällen, wo eigentlich nur ein bestimmtes oder mehrere bestimmte Lichtfelder leuchten sollen, auch Licht von der oder den aktivierten Lichtquelle(n) zu den benachbarten Lichtfeldern gelangt, die eigentlich nicht leuchten sollten, und diese eigentlich inaktiven Lichtfelder zumindest etwas und zu den beleuchteten Lichtfeldern hin leuchten. Das ist nicht nur störend, sondern führt auch dazu, dass der aktuelle Betriebszustand des Kraftfahrzeugs von den Personen an Bord des Fahrzeugs schlecht und nicht auf den ersten Blick erfasst werden kann.

Bei mehreren beleuchteten benachbarten Lichtfeldern führt das Übersprechen von Licht zudem zu einem Problem bei den beleuchteten Lichtfeldern, wenn die diesen zugeordneten Lichtquellen Licht unterschiedlicher Farben aussenden. Dabei kann die Lichtfarbe eines in einer bestimmten Farbe leuchtenden Lichtfelds durch das andersfarbige Licht einer Lichtquelle, die einem benachbarten Lichtfeld zugeordnet ist, verfälscht werden. Ein Lichtfeld, dessen Lichtquelle rotes Licht aussendet, kann somit bspw. durch gelbes Licht einer benachbarten Lichtquelle zumindest am Rand zu dem der gelben Lichtquelle zugeordneten Lichtfeld hin, orange leuchten. Das führt zu einem Verwischen der Lichtfarben der einzelnen Leuchtfelder.

Um dies zu verhindern, wird in der JP 2004 161 151 A vorgeschlagen, zwischen den einzelnen Lichtfeldern und den diesen zugeordneten Lichtquellen Trennwände vorzusehen, die verhindern, dass von einer Lichtquelle ausgesandtes Licht auf ein benachbartes Lichtfeld fällt. Das hat jedoch wiederum den Nachteil, dass zwischen den einzelnen Lichtfeldern relativ große Abstände sichtbar sind, die zwischen den Lichtfeldern ausgebildet sind, um die Trennwände zu kaschieren.

Weiterhin zeigt die JP H 09152360 ein Anzeigeinstrument mit den Merkmalen des Oberbegriffs des Anspruchs 1.

Ausgehend von dem beschriebenen Stand der Technik liegt der vorliegenden Erfindung somit die Aufgabe zugrunde, ein Anzeigeinstrument vorzuschlagen, bei dem einerseits ein Übersprechen von Licht verhindert wird und andererseits die einzelnen Lichtfelder unmittelbar aneinander grenzen.

Zur Lösung dieser Aufgabe wird ausgehend von dem Anzeigeinstrument der eingangs genannten Art vorgeschlagen, dass das Anzeigeinstrument mehrere nebeneinander angeordnete Lichtleiter aufweist, wobei jedem der Lichtfelder genau ein Lichtleiter zugeordnet ist, in den die mindestens eine dem jeweiligen Lichtfeld zugeordnete Lichtquelle Licht über eine Lichteintrittsfläche des Lichtleiters in diesen einkoppelt, und wobei eine Lichtaustrittsfläche des Lichtleiters, über die Licht aus dem Lichtleiter auskoppelt, das jeweilige Lichtfeld bildet. Der Lichtleiter ist zwischen der mindestens einen den einzelnen Lichtfeldern zugeordneten Lichtquelle und den einzelnen Lichtfeldern angeordnet. Er besteht aus einem für das Licht transparenten Material, insbesondere Glas oder Kunststoff. Vorzugsweise sind genauso viele Lichtleiter vorgesehen wie Lichtfelder in dem Anzeigeinstrument vorgesehen sind. Eine Lichteintrittsfläche eines Lichtleiters ist in Richtung der mindestens einen zugeordneten Lichtquelle ausgerichtet, um einen möglichst großen Anteil des ausgesandten Lichts zu erfassen. Um die Einkopplung des Lichts in den Lichtleiter besonders effizient auszugestalten, kann an der Eintrittsfläche eine Einkoppeloptik ausgebildet oder angeordnet sein.

Das in den Lichtleiter eingekoppelte Licht wird mittels Totalreflexion in Richtung der Lichtaustrittsfläche und damit des Lichtfelds in dem Lichtleiter propagiert. Dabei wird ein wesentlich größerer Teil an Licht in Richtung des Lichtfeldes geleitet, als dies im Stand der Technik ohne Trennwände zwischen den Lichtquellen und Lichtfeldern möglich ist. Ein Übersprechen von Licht wird bei der Erfindung verhindert, da die totalreflektierenden Seitenwände der Lichtleiter verhindern, dass zu viel Licht in die benachbarten Lichtleiter gelangt. Zudem sorgt der Verzicht auf Trennwände dafür, dass die Lichtfelder besonders dicht nebeneinander angeordnet werden können.

Die Lichtleiter haben die Form von quaderförmigen Blockoptiken, wobei eine Seite des Quaders die Lichteintrittsfläche und eine gegenüberliegende Seite die Lichtaustrittsfläche und damit das Lichtfeld bildet. Die seitlichen Flächen des Quaders zwischen der Eintritts- und der Austrittsfläche bilden totalreflektierende Begrenzungsflächen des Lichtleiters. Die Lichtaustrittsfläche kann gebogen sein und/oder auf einer Seite eine andere Abmessung aufweisen als auf einer gegenüberliegenden Seite. Die totalreflektierenden Seitenflächen können orthogonal zu den Seiten der Austrittfläche oder in einem beliebig anderen Winkel dazu ausgerichtet sein. Die Lichtaustrittsflächen der einzelnen Lichtfelder können unterschiedlich geformt sein und/oder unterschiedliche Abmessungen aufweisen.

Neben den Lichtfeldern kann eine Skala mit oder ohne Beschriftung von vorgegebenen Werten für den Betriebszustand des Kraftfahrzeugs angeordnet sein (z.B. Tank leer, ½ voll und ganz voll; Angabe von Geschwindigkeitswerten; Angabe von Drehzahlwerten; etc.), um das Ablesen des aktuellen Betriebszustands zu erleichtern.

Gemäß einer vorteilhaften Weiterbildung der vorliegenden Erfindung wird vorgeschlagen, dass die Lichtaustrittsflächen nebeneinander angeordneter Lichtleiter unmittelbar aneinander grenzen. Damit kann erreicht werden, dass die Lichtfelder ohne dunkle Zwischenräume unmittelbar aneinander grenzen, ohne dass es zu einem Übersprechen von Licht zwischen den benachbarten Lichtfeldern käme.

Gemäß einer bevorzugten Ausführungsform wird vorgeschlagen, dass zwischen nebeneinander angeordneten Lichtleitern ein Luftspalt ausgebildet ist. Dieser Luftspalt führt dazu, dass die Seitenwände des Lichtleiters das eingekoppelte Licht besonders effizient totalreflektieren, ohne dass ein übermäßig großer Teil des Lichts seitlich ausgekoppelt und evtl. in benachbarte Lichtleiter eingekoppelt wird. Der Luftspalt kann auch sehr dünn ausgestaltet sein, bspw. <1mm. Ferner ist es denkbar, dass zwar die Seitenwände der benachbarten Lichtleiter zwar durch einen Luftspalt voneinander getrennt sind, dass aber die Lichtaustrittsflächen von benachbarten Lichtleitern seitlich unmittelbar aneinander grenzen. In diesem Fall hätten die Lichtleiter eine leichte Trichterform mit einer Eintrittsfläche, die kleiner als die Austrittsfläche ist. Gemäß einer anderen bevorzugten Ausführungsform wird vorgeschlagen, dass zwischen den nebeneinander angeordneten Lichtleitern eine spiegelnde Folie als Abgrenzung von benachbarten Lichtleitern gegeneinander angeordnet ist. Eine solche spiegelnde Folie kann statt oder zusätzlich zu dem Luftspalt zwischen den Lichtleitern vorgesehen sein. Die spiegelnde Folie kann Lichtstrahlen, die unbeabsichtigt seitlich aus dem Lichtleiter auskoppeln, weil die Bedingungen für eine Totalreflexion im Lichtleiter nicht erfüllt sind, wieder zurück in den Lichtleiter koppeln, was zu einer Verbesserung des Wirkungsgrads des Anzeigeinstruments führt, da ein größerer Anteil des von den Lichtquellen erzeugten Lichts zur Ausleuchtung der Lichtfelder zur Verfügung steht. Die lichtundurchlässige Folie verhindert ein Übersprechen von Licht aus einem Lichtleiter in einen benachbarten Lichtleiter. Die Folie ist so dünn, dass ein Betrachter der ausgeleuchteten Lichtfelder keine dunklen, unbeleuchteten Bereiche (z.B. Stege) zwischen benachbarten Lichtfeldern erkennt.

Um den Aufbau einfach und die Kosten für das Anzeigeinstrument niedrig zu halten, wird vorgeschlagen, dass jedem der Lichtfelder genau eine Lichtquelle zugeordnet ist. Die Lichtquellen sind vorzugsweise als Halbleiterlichtquellen, insbesondere als Leuchtdioden (LEDs) ausgebildet. Leuchtdioden strahlen Licht in eine Hauptabstrahlrichtung in einen üblicherweise 180°-Halbraum aus. Die Hauptabstrahlrichtung ist vorzugsweise senkrecht zu der Eintrittsfläche des Lichtleiters ausgerichtet. Durch geeignete Einkoppeloptiken kann praktisch das gesamte von einer Leuchtdiode ausgesandte Licht erfasst und in den zugeordneten Lichtleiter eingekoppelt werden. Dadurch ergibt sich eine Steigerung des Wirkungsgrads des Anzeigeinstruments. Es können auch LEDs verwendet werden, die einen Streuwinkel von etwa 120° aufweisen. In diesem Fall kann auch ohne Einkoppeloptiken ein recht guter Wirkungsgrad erzielt werden, da praktisch das gesamte von den LEDs ausgesandte Licht auf die Eintrittsflächen der zugeordneten Lichtleiter fällt und eingekoppelt wird.

Die Lichtquellen können Licht unterschiedlicher Farben aussenden. Dadurch ist es möglich, in unterschiedlichen Farben leuchtende Lichtfelder zu erzeugen, die unterschiedliche Werte eines Betriebszustands des Kraftfahrzeugs unterschiedlich intensiv und subjektiv wahrnehmbar für den Betrachter anzeigen können. So ist es bspw. denkbar, den Füllstand eines Kraftfahrzeugtanks bis zu einem halb vollen Tank mit weißen Lichtfeldern anzuzeigen, einen Füllstand von einem halb vollen bis zu einem nur noch ein Viertel vollen Tank mit gelben Lichtfeldern, einen Füllstand von unterhalb einem Viertel vollen Tank mit orangen Lichtfeldern, und einen fast leeren Tank (in Reserve) mit roten Lichtfeldern. In entsprechender Weise könnte auch eine Drehzahl des Motors eines Kraftfahrzeugs oder ein beliebig anderer Betriebszustand des Fahrzeugs angezeigt werden. Durch die vorliegende Erfindung ergeben sich besonders scharf voneinander abgegrenzte Lichtfelder, die in deutlich unterscheidbaren Farben und über ihre gesamte Fläche homogen und in der gleichen Farbe leuchten.

Vorteilhafterweise ist das erfindungsgemäße Anzeigeinstrument zur Anzeige eines Füllstands eines Kraftstofftanks des Kraftfahrzeugs, eines Ladezustands einer Batterie des Kraftfahrzeugs, einer Geschwindigkeit des Kraftfahrzeugs, einer Drehzahl eines Motors des Kraftfahrzeugs, eines Niveaus einer eingestellten Leuchtweite von Scheinwerfern des Kraftfahrzeugs, einer eingestellten Temperatur oder einer eingestellten Stufe eines Gebläses einer Heizungsanlage ausgebildet.

Ein bevorzugtes Ausführungsbeispiel der Erfindung wird nachfolgend anhand der Figuren näher erläutert. Es zeigen:
Fig. 1 ein erfindungsgemäßes Anzeigeinstrument in einer schematischen Schnittansicht;
Fig. 2 ein erfindungsgemäßes Anzeigeinstrument in einer schematischen Draufsicht;
Fig. 3 ein erfindungsgemäßes Anzeigeinstrument in einem Armaturenbrett eines Kraftfahrzeugs;
Fig. 4 das Anzeigeinstrument aus Fig. 3 in vergrößerter Ansicht;
Fig. 5 ein aus dem Stand der Technik bekanntes Anzeigeinstrument; und
Fig. 6 ein aus dem Stand der Technik bekanntes Anzeigeinstrument in einem Armaturenbrett eines Kraftfahrzeugs.

Die vorliegende Erfindung betrifft ein Anzeigeinstrument zur Anzeige eines Betriebszustands eines Kraftfahrzeugs mittels mehrerer nebeneinander angeordneter Lichtfelder, die im Blickbereich einer Person an Bord des Kraftfahrzeugs angeordnet sind. Jedem der Lichtfelder ist mindestens eine Lichtquelle zugeordnet, die Licht zum Ausleuchten des Lichtfelds aussendet.

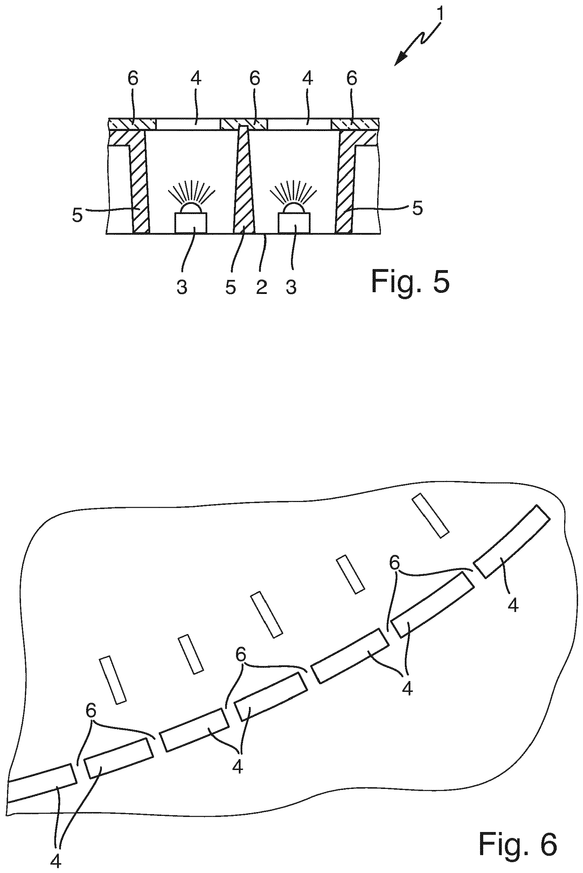

Ein solches Anzeigeinstrument ist aus der JP 2004 161 151 A bekannt und in Fig. 5 dargestellt. Das bekannte Anzeigeinstrument ist in seiner Gesamtheit mit dem Bezugszeichen 1 bezeichnet. Das Anzeigeinstrument 1 umfasst eine Leiterplatte 2, auf der nebeneinander mehrere Leuchtdioden 3 als Lichtquellen angeordnet und kontaktiert sind. Jeder der LEDs 3 ist ein Lichtfeld 4 zugeordnet, das durch das von den LEDs 3 ausgesandte Licht zum Leuchten gebracht werden kann. In dem dargestellten Beispiel ist die linke LED 3 eingeschaltet, so dass das linke Lichtfeld 4 leuchtet, während das rechte Lichtfeld 4 dunkel erscheinen sollte.

Um ein Übersprechen von Licht aus dem einen (linken) Lichtfeld 4 in ein benachbartes (das rechte) Lichtfeld 4 zu verhindern, wird im Stand der Technik vorgeschlagen, zwischen den einzelnen Lichtfeldern 4 und den diesen zugeordneten Lichtquellen 3 Trennwände 5 vorzusehen, die verhindern, dass von einer Lichtquelle 3 ausgesandtes Licht auf ein benachbartes Lichtfeld 4 fällt. Das hat jedoch den Nachteil, dass zwischen den einzelnen Lichtfeldern 4 relativ große Abstandsbereiche 6 sichtbar sind, die zwischen den Lichtfeldern 4 ausgebildet sind, um die Trennwände 5 zu kaschieren. Die Abstandsbereiche 6 erscheinen einem Betrachter als dunkle Stege zwischen den beleuchteten Lichtfeldern 4, wie man Fig. 6 entnehmen kann.

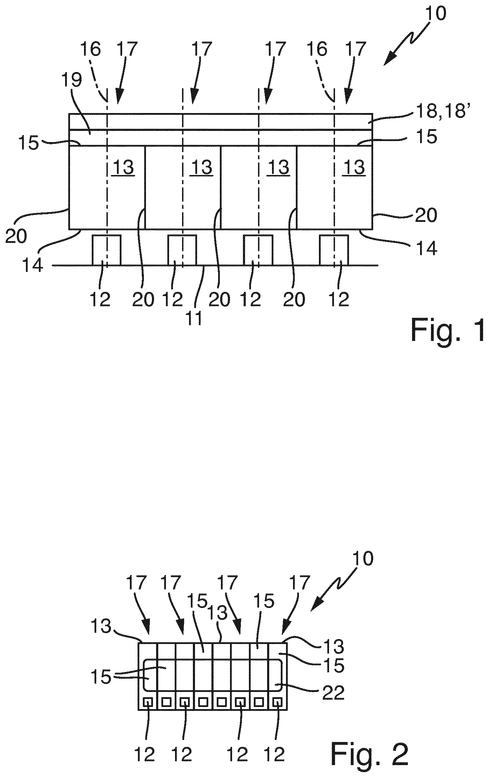

Ausgehend von dem beschriebenen Stand der Technik liegt der vorliegenden Erfindung somit die Aufgabe zugrunde, ein Anzeigeinstrument vorzuschlagen, bei dem einerseits ein Übersprechen von Licht verhindert wird und andererseits die einzelnen Lichtfelder unmittelbar aneinander grenzen. Das erfindungsgemäße Anzeigeinstrument wird anhand der Fig. 1 bis 4 näher erläutert, wo es in seiner Gesamtheit mit dem Bezugszeichen 10 bezeichnet ist.

Das Anzeigeinstrument 10 verfügt über eine Leiterplatte 11, auf der nebeneinander mehrere Leuchtdioden (LEDs) 12 als Lichtquellen angeordnet und kontaktiert sind. Jeder Lichtquelle 12 ist ein Lichtleiter 13 aus einem transparenten Material, bspw. Glas oder Kunststoff, zugeordnet. Die Lichtleiter 13 weisen jeweils eine Lichteintrittsfläche 14 und eine Lichtaustrittsfläche 15 auf. Eine Hauptabstrahlrichtung 16 der LEDs 12 verläuft in dem dargestellten Beispiel senkrecht nach oben und senkrecht zu der Eintrittsfläche 14 des zugeordneten Lichtleiters 13. Selbstverständlich können auch mehr als eine LED 12 pro Lichtleiter 13 vorgesehen sein.

Die Lichtleiter 13 sind nebeneinander angeordnet. Jedem der Lichtfelder 17 des Anzeigeinstruments 10 ist genau ein Lichtleiter 13 zugeordnet. Die mindestens eine dem jeweiligen Lichtfeld 17 zugeordnete Lichtquelle 12 koppelt Licht über die Lichteintrittsfläche 14 des Lichtleiters 13 in diesen ein. Die Lichtaustrittsfläche 15 des Lichtleiters 13, über die Licht aus dem Lichtleiter 13 auskoppelt, bildet das jeweilige auszuleuchtende oder ausgeleuchtete Lichtfeld 17. In Lichtaustrittsrichtung des aus den Lichtleitern 13 ausgekoppelten Lichts ist ein Ziffernblatt 18 eines Instruments angeordnet, in welches das Anzeigeinstrument 10 integriert ist. Das Instrument kann Teil eines Armaturenbretts des Kraftfahrzeugs sein. Das Ziffernblatt 18 ist entweder insgesamt transparent oder weist transparente Abschnitte auf, durch die das aus den Lichtleitern 13 ausgekoppelte Licht hindurchtreten kann. Alternativ kann statt des Ziffernblatts 18 auch ein transparenter Bereich einer Blende 18' des Armaturenbretts vorgesehen sein, falls das Anzeigeinstrument 10 nicht in ein Instrument integriert ist. Das kann bspw. bei einer Klima- oder Heizungsregelung der Fall sein, wo das Anzeigeinstrument 10 eine eingestellte Temperatur oder eine eingestellte Gebläsestufe anzeigt. Zwischen den Lichtaustrittsflächen 15 der Lichtleiter 13 und dem Ziffernblatt 18 oder der Blende 18' kann eine Klebeschicht 19 vorgesehen sein.

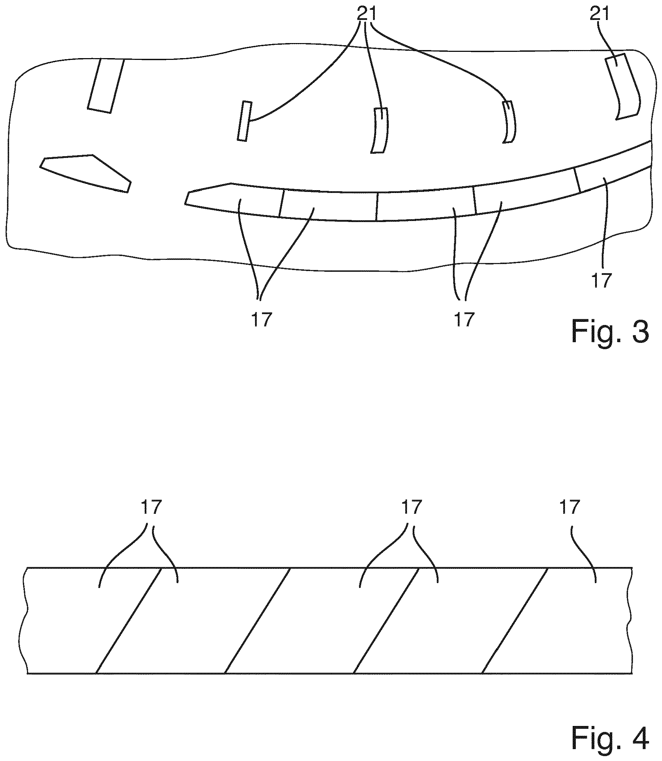

Das in die Lichtleiter 13 eingekoppelte Licht wird mittels Totalreflexion in Richtung der Lichtaustrittsfläche 15 und damit des ausgeleuchteten Lichtfelds 17 in dem Lichtleiter 13 propagiert. Dabei wird ein wesentlich größerer Teil an Licht in Richtung des Lichtfeldes 17 geleitet, als dies im Stand der Technik ohne Trennwände 5 (vgl. Fig. 5) zwischen den Lichtquellen 3 und den Lichtfeldern 4 möglich ist. Ein Übersprechen von Licht wird bei der Erfindung verhindert, da die totalreflektierenden Seitenwände 20 der Lichtleiter 13 verhindern, dass zu viel Licht in die benachbarten Lichtleiter 13 gelangt. Zudem sorgt der Verzicht auf Trennwände 5 dafür, dass die Lichtfelder 17 besonders dicht nebeneinander angeordnet werden können. Das Ergebnis mit dicht nebeneinander liegenden, unmittelbar aneinander grenzenden Lichtfeldern 17 ohne dunkle Bereiche 6 zwischen den Lichtfeldern 17 kann den Fig. 3 und 4 entnommen werden.

Die Lichtleiter 13 haben vorzugsweise die Form von quaderförmigen Blockoptiken, wobei eine Unterseite des Quaders die Lichteintrittsfläche 14 und eine gegenüberliegende Oberseite die Lichtaustrittsfläche 15 und damit das Lichtfeld 17 bildet. Die seitlichen Flächen 20 des Quaders 13 zwischen der Eintritts- und der Austrittsfläche 14, 15 bilden totalreflektierende Begrenzungsflächen des Lichtleiters 13. Die Lichtaustrittsfläche 15 kann gebogen sein, so dass die nebeneinander liegenden Lichtfelder 17 einen Bogenabschnitt bilden (vgl. Fig. 3). Die Lichtaustrittsfläche 15 kann eben oder gewölbt ausgebildet sein. Ein seitlicher Rand der Lichtaustrittsfläche 15 kann eine andere Abmessung aufweisen als der gegenüberliegende Rand der Austrittsfläche 15, so dass sich ein beliebig geformtes viereckiges Lichtfeld 17 (z.B. in der Form eines Trapezes) ergibt. Die totalreflektierenden Seitenflächen 20 können orthogonal zu der Austrittfläche 15 oder in einem beliebig anderen Winkel dazu ausgerichtet sein. Die Lichtaustrittsflächen 15 der einzelnen Lichtleiter 13 können unterschiedlich geformt sein und/oder unterschiedliche Abmessungen aufweisen.

Neben den Lichtfeldern 17 kann eine Skala 21 mit oder ohne Beschriftung von vorgegebenen Werten für den Betriebszustand des Kraftfahrzeugs angeordnet sein (z.B. Tank leer, ½ voll und ganz voll; Angabe von Geschwindigkeitswerten; Angabe von Drehzahlwerten; etc.), um das Ablesen des aktuellen Betriebszustands zu erleichtern. Dies ist bspw. in Fig. 3 gezeigt.

Zwischen den nebeneinander angeordneten Lichtleitern 13 kann ein Luftspalt (nicht dargestellt) ausgebildet sein. Dieser Luftspalt führt dazu, dass die Seitenwände 20 des Lichtleiters 13 das eingekoppelte Licht besonders effizient totalreflektieren, ohne dass ein übermäßig großer Teil des Lichts seitlich ausgekoppelt und evtl. in benachbarte Lichtleiter 13 eingekoppelt wird. Der Luftspalt kann auch sehr dünn ausgestaltet sein, bspw. <1mm. Ferner ist es denkbar, dass zwar die Seitenwände 20 der benachbarten Lichtleiter 13 zwar durch einen Luftspalt voneinander getrennt sind, dass aber die Lichtaustrittsflächen 15 von benachbarten Lichtleitern 13 seitlich unmittelbar aneinander grenzen. In diesem Fall hätten die Lichtleiter 13 eine leichte Trichterform mit einer Eintrittsfläche 14, die kleiner als die Austrittsfläche 15 ist.

Alternativ oder zusätzlich ist es möglich, dass zwischen den nebeneinander angeordneten Lichtleitern 13 entlang ihrer Seitenflächen 20 eine spiegelnde Folie (nicht dargestellt) als Abgrenzung von benachbarten Lichtleitern 13 angeordnet ist. Eine solche spiegelnde Folie kann statt oder zusätzlich zu dem Luftspalt zwischen den Lichtleitern 13 vorgesehen sein. Die spiegelnde Folie kann Lichtstrahlen, die unbeabsichtigt seitlich aus dem Lichtleiter 13 auskoppeln, weil die Bedingungen für eine Totalreflexion im Lichtleiter 13 nicht erfüllt sind, wieder zurück in den Lichtleiter 13 koppeln, was zu einer Verbesserung des Wirkungsgrads des Anzeigeinstruments 10 führt. Die lichtundurchlässige Folie verhindert ein Übersprechen von Licht aus einem Lichtleiter 13 in einen benachbarten Lichtleiter 13. Die Folie ist so dünn, dass ein Betrachter der ausgeleuchteten Lichtfelder 17 keine dunklen, unbeleuchteten Bereiche zwischen benachbarten Lichtfeldern 17 erkennt (vgl. Fig. 4).

Die Lichtquellen 12 können Licht unterschiedlicher Farben aussenden. Dadurch ist es möglich, in unterschiedlichen Farben leuchtende Lichtfelder 17 zu erzeugen, die unterschiedliche Werte eines Betriebszustands des Kraftfahrzeugs unterschiedlich intensiv und subjektiv wahrnehmbar für den Betrachter anzeigen können. Durch die vorliegende Erfindung ergeben sich besonders scharf voneinander abgegrenzte Lichtfelder 17, die in deutlich unterscheidbaren Farben und über ihre gesamte Fläche homogen und in der gleichen Farbe leuchten.

In Fig. 2 ist eine Draufsicht auf das Anzeigeinstrument 10 gezeigt, wie es von einem Betrachter wahrgenommen wird. In diesem Beispiel sind acht Lichtfelder 17 nebeneinander angeordnet. Dementsprechend verfügt das Anzeigeinstrument 10 über acht nebeneinander angeordnete Lichtquellen 12 und Lichtleiter 13. Über die Lichtaustrittsflächen 15 der Lichtleiter 13 wird das eingekoppelte Licht abgestrahlt. In Lichtaustrittsrichtung des aus den Austrittsflächen 15 ausgekoppelten Lichts kann ein lichtundurchlässiges Blendenelement angeordnet sein, das einen ausgeleuchteten Bereich 22 der Lichtfelder 17 zum äußeren Rand des Anzeigeinstruments 10 hin begrenzt. Auch hier grenzen die Austrittsflächen 15 der Lichtleiter 13 seitlich dicht, vorzugsweise unmittelbar aneinander.

## Patentansprüche

1. Anzeigeinstrument (10) zur Anzeige eines Betriebszustands eines Kraftfahrzeugs mittels mehrerer neben einander angeordneter Lichtfelder (17), die im Blickbereich einer Person an Bord des Kraftfahrzeugs angeordnet sind, wobei jedem der Lichtfelder (17) mindestens eine Lichtquelle (12) zugeordnet ist, die Licht zum Ausleuchten des Lichtfelds (17) aussendet, wobei das Anzeigeinstrument (10) mehrere nebeneinander angeordnete Lichtleiter (13) aufweist, wobei jedem der Lichtfelder (17) genau ein Lichtleiter (13) zugeordnet ist, in den die mindestens eine dem jeweiligen Lichtfeld (17) zugeordnete Lichtquelle (12) Licht über eine Lichteintrittsfläche (14) des Lichtleiters (13) in diesen einkoppelt, und wobei eine Lichtaustrittsfläche (15) des Lichtleiters (13), über die Licht aus dem Lichtleiter (13) auskoppelt, das jeweilige Lichtfeld (17) bildet, **dadurch gekennzeichnet, dass** die Lichtleiter (13) die Form von quaderförmigen Blockoptiken haben, wobei bei jedem der Quader eine der mindestens einen Lichtquelle (12) gegenüberliegend angeordnete Seite des Quaders die Lichteintrittsfläche (14) und eine der Lichteintrittsfläche (14) gegenüberliegende Seite die Lichtaustrittsfläche (15) und damit das Lichtfeld (17) bildet, wobei das Licht in dem Lichtleiter (13) von der Eintrittsfläche (14) bis zu der Austrittsfläche (15) in Richtung des Lichtfeldes (17) propagiert, und wobei alle seitlichen Flächen (20) des Quaders zwischen der Eintrittsfläche (14) und der Austrittsfläche (15) totalreflektierende Begrenzungsflächen des Lichtleiters (13) bilden.

2. Anzeigeinstrument (10) nach Anspruch 1, **dadurch gekennzeichnet, dass** die Lichtaustrittsflächen (15) nebeneinander angeordneter Lichtleiter (13) unmittelbar aneinander grenzen.

3. Anzeigeinstrument (10) nach Anspruch 1 oder 2, **dadurch gekennzeichnet, dass** zwischen nebeneinander angeordneten Lichtleitern (13) ein Luftspalt ausgebildet ist.

4. Anzeigeinstrument (10) nach einem der Ansprüche 1 bis 3, **dadurch gekennzeichnet, dass** zwischen den nebeneinander angeordneten Lichtleitern (13) eine spiegelnde Folie als Abgrenzung von benachbarten Lichtleitern (13) angeordnet ist.

5. Anzeigeinstrument (10) nach einem der Ansprüche 1 bis 4, **dadurch gekennzeichnet, dass** jedem der Lichtfelder (17) genau eine Lichtquelle (12) zugeordnet ist.

6. Anzeigeinstrument (10) nach einem der Ansprüche 1 bis 5, **dadurch gekennzeichnet, dass** die Lichtquellen (12) als Halbleiterlichtquellen, insbesondere als Leuchtdioden ausgebildet sind.

7. Anzeigeinstrument (10) nach einem der Ansprüche 1 bis 6, **dadurch gekennzeichnet, dass** die Lichtquellen (12) Licht unterschiedlicher Farben aussenden.

8. Anzeigeinstrument (10) nach einem der Ansprüche 1 bis 7, **dadurch gekennzeichnet, dass** das Anzeigeinstrument (10) zur Anzeige eines Füllstands eines Kraftstofftanks des Kraftfahrzeugs, eines Ladezustands einer Batterie des Kraftfahrzeugs, einer Geschwindigkeit des Kraftfahrzeugs, einer Drehzahl eines Motors des Kraftfahrzeugs, eines Niveaus einer eingestellten Leuchtweite von Scheinwerfern des Kraftfahrzeugs, einer eingestellten Temperatur oder einer eingestellten Stufe eines Gebläses einer Heizungsanlage ausgebildet ist.

## Claims

1. An indicator instrument (10) for indicating an operational condition of a motor vehicle by means of a plurality of adjacently arranged light fields (17) that are arranged in the field of vision of a person on board the motor vehicle, wherein each of the light fields (17) is associated with at least one light source (12) that emits light for illuminating the light field (17), wherein the indicator instrument (10) comprises a plurality of adjacently arranged light guides (13), wherein each light field (17) is associated with exactly one light guide (13) into which the at least one light source (12) associated with each light field (17) couples light via a light input surface (14) of the light guide (13), and wherein a light output surface (15) of the light guide (13), via which the light is decoupled from the light guide (13), forms the respective light field (17), **characterised in that,** the light guides (13) have the form of rectangular block optics, wherein, for each of the cuboids, one side of the cuboid arranged opposite the at least one light source (12) forms the light input surface (14) and a side opposite the light input surface (14) forms the light output surface (15) and thus the light field (17), wherein the light propagates in the light guide (13) from the input surface (14) to the output surface (15) in the direction of the light field (17), and wherein all lateral surfaces (20) of the cuboid between the input surface (14) and the output surface (15) form totally reflective boundary surfaces of the light guide (13).

2. The indicator instrument (10) according to claim 1, **characterised in that** the light output surfaces (15) of adjacently arranged light guides (13) directly adjoin one another.

3. The indicator instrument (10) according to claim 1 or claim 2, **characterised in that** an air gap is formed between adjacently arranged light guides (13).

4. The indicator instrument (10) according to any one of claims 1 to 3, **characterised in that**, between the adjacently arranged light guides (13), a reflective foil is arranged as a boundary of adjacent light guides (13).

5. The indicator instrument (10) according to any one of claims 1 to 4, **characterised in that** each of the light fields (17) is associated with exactly one light source (12).

6. The indicator instrument (10) according to any one of claims 1 to 5, **characterised in that** the light sources (12) are formed as semiconductor light sources, in particular as light-emitting diodes.

7. The indicator instrument (10) according to any one of claims 1 to 6, **characterised in that** the light sources (12) emit light of different colours.

8. The indicator instrument (10) according to any one of claims 1 to 7, **characterised in that** the indicator instrument (10) is designed for indicating a level of a fuel tank of the motor vehicle, a charge state of a battery of the motor vehicle, a speed of the motor vehicle, a speed of an engine of the motor vehicle, a level of a set light range of headlamps of the motor vehicle, a set temperature or a set level of a fan of a heating system.

## Revendications

1. Afficheur (10) pour l'affichage d'un état de fonctionnement d'un véhicule automobile au moyen de plusieurs champs lumineux (17) disposés les uns à côté des autres, qui sont disposés dans la zone de regard d'une personne à bord du véhicule automobile, au moins une source lumineuse (12) étant attribuée à chacun des champs lumineux (17), qui émet de la lumière pour éclairer le champ lumineux (17), l'afficheur (10) présentant plusieurs fibres optiques (13) disposées les unes à côté des autres, une fibre optique (13) étant attribuée précisément à chacun des champs lumineux (17), dans lesquels ladite source lumineuse (12) attribuée au champ lumineux (17) respectif couple la lumière par le biais d'une surface d'entrée de lumière (14) de la fibre optique (13) dans ceux-ci et une surface de sortie de lumière (15) de la fibre optique (13), par le biais de laquelle la lumière provenant de la fibre optique (13) est découplée, formant le champ lumineux (17) respectif, **caractérisé en ce que** les fibres optiques (13) ont la forme d'éléments optiques en blocs parallélépipédiques, pour chacun des parallélépipèdes, un côté du parallélépipède disposé en regard de ladite source lumineuse (12) formant la surface d'entrée de lumière (14) et un côté en regard de la surface d'entrée de lumière (14) formant la surface de sortie de lumière (15) et ainsi forme le champ lumineux (17), la lumière dans la fibre optique (13) se propageant depuis la surface d'entrée (14) jusqu'à la surface de sortie (15) en direction de la fibre optique (17) et toutes les surfaces latérales (20) du parallélépipède entre la surface d'entrée (14) et la surface de sortie (15) formant des surfaces de délimitation totalement réfléchissantes de la fibre optique (13).

2. Afficheur (10) selon la revendication 1, **caractérisé en ce que** les surfaces de sortie de lumière (15) de fibres optiques (13) adjacentes sont mutuellement directement adjacentes.

3. Afficheur (10) selon la revendication 1 ou 2, **caractérisé en ce que**, entre des fibres optiques (13) adjacentes est formée une lame d'air.

4. Afficheur (10) selon une des revendications 1 à 3, **caractérisé en ce que**, entre les fibres optiques (13) adjacentes, un film spéculaire est disposé en guise de séparation entre les fibres optiques (13) voisines.

5. Afficheur (10) selon une des revendications 1 à 4, **caractérisé en ce qu'**une source lumineuse (12) est attribuée précisément à chacun des champs lumineux (17).

6. Afficheur (10) selon une des revendications 1 à 5, **caractérisé en ce que** les sources lumineuses (12) sont formées comme des sources lumineuses à semi-conducteur, en particulier comme des diodes électroluminescentes.

7. Afficheur (10) selon une des revendications 1 à 6, **caractérisé en ce que** les sources lumineuses (12) émettent de la lumière de couleurs différentes.

8. Afficheur (10) selon une des revendications 1 à 7, **caractérisé en ce que** l'afficheur (10) est conçu pour l'affichage d'un état de remplissage d'un réservoir de carburant du véhicule automobile, d'un état de charge d'une batterie du véhicule automobile, d'une vitesse du véhicule automobile, d'un régime du moteur du véhicule automobile, d'un niveau d'une portée d'éclairage réglée de phares du véhicule automobile, d'une température réglée ou d'un niveau réglé d'un ventilateur d'une unité de chauffage.
